Europäisches Patentamt

European Patent Office

Office européen des brevets

(11) Publication number: **0 090 448**
**B1**

# EUROPEAN PATENT SPECIFICATION

(45) Date of publication of patent specification: **14.08.85**

(51) Int. Cl.⁴: **C 08 C 19/34, C 09 D 5/14**

(21) Application number: **83200363.6**

(22) Date of filing: **16.03.83**

(54) **Polymers containing organotin compounds and paint on the basis thereof.**

(30) Priority: **22.03.82 NL 8201172**

(43) Date of publication of application:
**05.10.83 Bulletin 83/40**

(45) Publication of the grant of the patent:
**14.08.85 Bulletin 85/33**

(84) Designated Contracting States:
**BE DE FR NL SE**

(56) References cited:
**BE-A- 644 501**
**DE-A-2 235 601**
**FR-A-2 401 207**
**US-A-3 845 005**

(73) Proprietor: **DSM RESINS BV**
**Ceintuurbaan 5**
**NL-8022 AW Zwolle (NL)**

(72) Inventor: **Van der Klooster, Jacob Paulus**
**Merwedesingel 9**
**NL-3353 GN Papendrecht (NL)**
Inventor: **Van Oosterbos, Johannes Paulus Maria**
**Westeinde 88**
**NL-3164 BZ Maassluis (NL)**

(74) Representative: **Leherte, Georges Maurice Lucien Marie et al**
**Octrooibureau DSM P.O.Box 9**
**NL-6160 MA Geleen (NL)**

Courier Press, Leamington Spa, England.

# 0 090 448

## Description

It is known to add germicides to marine paint to avoid undesired fouling by, for instance, algae, grasses and molluscs. Organotin compounds are often applied for this purpose. It is also known to link the organotin compound to a polymer via carboxylic acid groups and to apply such polymer containing organotin compounds in marine paint. On contact of the top coat with water, hydrolysis takes place and the biologically active organotin compound is released. A disadvantage of these products is that in most cases they are, as such, not suitable as paint binders.

The object of the invention is a polymer that contains organotin compound, that can be produced in a simple fashion, and that can be applied as binder in paint.

According to the invention such a polymer consists of a skeleton of cyclized rubber, to which skeleton organotin phenolates of the formula $R_3Sn-O-Z$ are bonded via a carbon-carbon bond between the phenolate group and the cyclized rubber, R in the formula representing a hydrocarbon group containing 1 to 15 carbon atoms and bonded directly to the metal, while Z represents a phenolate group derived from a phenolic compound containing 6—15 carbon atoms.

These polymers can be prepared in a simple fashion. They can replace unmodified cyclized rubber as paint binder. The top coats obtained when applying paint with the polymers according to the invention as binder are self-polishing and remain smooth and free from fouling for a very long time.

The active metal compound is present in the form of organotin phenolate $R_3-Sn-O-Z$. In this, Z represents a phenolate group that is derived from a phenolic compound containing 6—15 carbon atoms. Examples of such compounds are phenol itself, monoalkylphenols such as n-butyl phenol, n-nonyl phenol, isopropyl phenol, amyl phenol, octyl phenol and cresole, polycyclic phenols such as α-naphtol, substituted phenols such as chlorophenol and guaiacol, polyphenols such as resorcinol and arylphenols such as p-phenyl phenol. In most cases Z is derived from phenol or from an alkylphenol. In the formula, R represents a hydrocarbon residue containing 1—15 carbon atoms. This may be an alkyl group, such as a methyl, n-propyl, i-propyl, n-butyl, cyclohexyl, amyl, octyl, or nonyl group, or also an aryl group such as a phenyl, benzyl, cresyl group or also a cycloalkyl group such as cyclohexyl. The three hydrocarbon groups bonded to the tin atom usually are identical, but they may also differ from one another, for instance as in a methyl-dibutyl tin residue. By preference R is a $C_{3-6}$ alkyl group or a phenyl group.

The tin content of the polymer (calculated as metallic tin relative to the entire polymer) may be between 1.5 and 20 wt.%. In most cases a polymer having a tin content of between 2.5 and 15 wt.%, in particular of between 5 and 10 wt.%, is preferred.

The skeleton of the tin-containing polymer consists of cyclized rubber. Cyclized rubber is understood to mean products that can be considered derivatives of isoprene. They contain a large amount of condensed or non-condensed cyclohexane rings and are not or weakly unsaturated. Cyclized rubber can be obtained by heating natural rubber or a synthetic polyisoprene in the presence of an acid catalyst. Among the catalysts that may be used are, for instance, sulphuric acid, p-toluenesulphonic acid, phosphoric acid, boron trifluoride, aluminium chloride or tin tetrachloride. A cyclized rubber containing phenol residues linked to the polymer via carbon-carbon bonds can be obtained by having the cyclization take place in a solvent to which an amount of a phenol has been added or by using a melted phenol as reaction medium. The relevant process is known, for instance from German patent 675564. As phenolic compound the compounds mentioned above may be applied. By preference phenol itself or an alkylphenol is used. The content of phenolic compounds may be between 2 and 20 wt.% calculated on the substituted cyclized rubber. By preference it is between 3 and 15 wt.%. The molecular weight in general is between 5000 and 50,000.

The polymers according to the invention can be prepared by reacting a phenol-substituted cyclized rubber with a suitable organotin compound. As such, a trihydrocarbyl tin oxide, a bis (tri-hydrocarbyl)-oxide, a trihydrocarbyl tin hydroxide or alkoxide can be used. Examples are bis (tri-n-butyl tin) oxide, triphenyl tin oxide, tricyclohexyl tin oxide, tri-n-propyl tin hydroxide, tri-n-butyl tin oxide. The reaction proceeds readily, even in the absence of an etherification catalyst. The reaction is carried out in a suitable inert solvent, preferably while heating at 50—200°C, the water formed being discharged. The pressure is not important. As solvent, use can be made of, for instance, an aliphatic or aromatic hydrocarbon. The simplest way is to use an amount of tin compound that roughly corresponds to the amount of phenolic hydroxyl groups available for bonding. If desired, a deficit may also be applied. It is also possible to start from an organotin chloride or another halide. In this case it is preferred to first convert the phenolic hydroxyl groups bonded to the polymer into alkali phenolate groups. After this, the polymer can be reacted with the organotin chloride in an inert solvent. Thus, the tin-modified cyclized rubber is obtained side by side with the alkali chloride, which can easily be removed.

Suitable organotin chlorides include tri-n-propyl tin chloride, tri-n-butyl tin chloride, tricyclohexyl tin chloride and triphenyl tin chloride.

The polymer containing a tin compound according to the invention can be applied as binder in paint. An advantage is that the amount of plasticizer to be added to this binder is less than that to be added to an unmodified cyclized rubber or may even be zero. Because of its germicidal properties it will find application especially in marine paint. In this context marine paint is understood to mean all paint to be applied to surfaces that are regularly or continuously in contact with water. Paint that contains the polymer according

2

to the invention as binder can advantageously be used for, for instance, painting ship's hulls, off-shore installations, pipe lines and piers. The paint is self-polishing, which means it slowly dissolves on contact with flowing water. The resistance of ship's hulls therefore remains extremely small, not only because there is no fouling but also because the top coat remains smooth.

The rate at which the germicidal tin compound is released can optionally be decreased somewhat by applying, besides the polymer according to the invention, yet another polymer in the paint, for instance an unmodified cyclized rubber, or by including, for instance, a larger amount of chlorinated paraffin or another hydrolysis-retarding compound, plasticizing or not, in the paint.

By preference the paint contains at least 60 wt.%, and more in particular between 70 and 85 wt.%, calculated relative to the solids, of seawater-sensitive material. Seawater-sensitive material comprises the polymer according to the invention, seawater-sensitive pigments and fillers such as, in particular, zinc oxide, zinc chromate, cuprous oxide and copper acetoarsenite and possible other water-soluble components. Besides the seawater-sensitive pigments the paint in most cases contains pigments that are not sensitive to seawater, up to a total pigment volume of at most about 25 vol.%. Furthermore, a thickener may be added and, if desired, other customary additives.

The invention will be explained on the basis of the following examples, without being restricted to the embodiments described therein.

Example I

A tin-containing polymer was prepared by dissolving 100 kg of a cyclized rubber containing 10 wt.% phenol in 66.5 l white spirit and adding 30 kg bis (tri-n-butyl tin) oxide to the solution.

While being stirred, the resultant solution was heated for one hour at a temperature of between 150°C and 180°C at 1 bar, the released reaction water being separated from the reflux and discharged.

On cooling, a solution of a polymer containing 9.0 wt.% tin (calculated as metal relative to the solids) was obtained.

Example II

The polymer obtained in Example I was used for the formulation of a number of paints. These paints, Nos. 1 through 6, were of the compositions shown in Table 1.

To enable a comparison to be made, a number of paints were prepared in the same way but now with a mixture of 92% unmodified cyclized rubber, as used as starting material in Example I, and 8% chlorinated paraffin as binder. The paints were applied to test panels measuring 12×38 cm which, after curing of the layer, were exposed to flowing seawater. After 15 months the panels coated with the paint according to the invention still had an entirely smooth surface without any fouling. The controls were covered with a layer of barnacles and algae.

**0 090 448**

TABLE 1

Compositions of paints 1 through 6, all figures representing parts by weight.

| | 1 | 2 | 3 | 4 | 5 | 6 |
|---|---|---|---|---|---|---|
| polymer solution acc to Example I | 20 | 24 | 16 | 18 | 24 | 20 |
| zinc oxide | 12 coll | 5 am | 20 ac | 20 am 40 ac | 48 am | 30 am |
| cuprous oxide | 58 | 61.3 | — | — | — | 30 |
| copper acetoarsenite | — | — | 30 | — | 10 | — |
| lead oxide | — | | 15 | | | |
| red iron oxide | — | — | 3 | — | — | 3 |
| phthalocyanine green pigment | — | — | | 2 | — | |
| Bentone 34 | 0.4 | 0.4 | — | — | 0.5 | |
| tributyl tin oxide | — | — | — | 3 | — | — |
| triphenyl tin chloride | — | — | — | — | 3 | — |
| Thixatrol ST | — | — | — | 0.2 | — | 0.4 |
| methanol | 0,1 | 0,1 | — | — | 0,1 | — |
| white spirit | 9.5 | 9.2 | 14 | 16.8 | 14.4 | 16.6 |
| dibutyl phthalate | — | — | 2 | — | — | — |

am=amorphous
ac=acicular
coll=colloidal

Example III

A tin-containing polymer was prepared in the way described in Example I, starting from 100 kg of a cyclized rubber that contained 7 wt.% cresole, 66.5 kg white spirit and 17 kg bis (tri-n-propyl tin) oxide. The polymer obtained in this way contained 7.5 wt.% tin (calculated as metal relative to solids). This polymer solution, too, was suitable for processing in paint.

Example IV

Two further paints could be formulated as in Example II. The composition was

| | 7 | 8 |
|---|---|---|
| paint nr. | 7 | 8 |
| polymer solution according to Example I | 25 | 30 |
| zinc oxide amorphous | 10 | 8 |
| zinc oxide colloidal | 20 | 18 |
| cuprous oxide | 40 | 30 |
| triphenyltin fluoride | — | 10 |
| bentone 34 | 0,2 | 0,2 |
| white spirit | 4,8 | 3,8 |

Panels coated with these paints were still perfectly smooth after 5 months immersion to sea water.

4

**Claims**

1. Polymer containing organotin compound that is suitable for application as binder in paint, characterized in that it consists of a skeleton of cyclized rubber, to which skeleton organotin phenolates of the formula $R_3Sn—O—Z$ are bonded via a carbon-carbon bond between the phenolate group and the cyclized rubber, R in the formula representing a hydrocarbon group containing 1 to 15 carbon atoms that is bonded directly to the metal atom and Z representing a phenolate group derived from a phenolic compound containing 6—15 carbon atoms.

2. Polymer according to claim 1, characterized in that the tin content, calculated as metallic tin relative to the entire polymer is between 1.5 and 20 wt.%.

3. Polymer according to claims 1—2, characterized in that the tin content is between 2.5 and 15 wt.%.

4. Polymer according to claims 1—3, characterized in that the tin content is between 5 and 10 wt.%.

5. Polymer according to claims 1—4, characterized in that R is a $C_{3-6}$ alkyl or cycloalkyl group or a phenyl group.

6. Polymer according to claims 1—5, characterized in that Z is derived from phenol or a $C_{7-15}$ alkylphenol.

7. Process for the preparation of a polymer according to one or more of claims 1—6, characterized in that a cyclized rubber containing phenolic groups bonded via a carbon-carbon bond is reacted at elevated temperature and in an inert solvent with a tri-hydrocarbyl tin oxide or hydroxide that is capable of etherification, the reaction water released being removed, or with a tri-hydrocarbyl tin chloride.

8. Paint containing a germicide organotin compound, characterized in that as binder the paint contains a polymer consisting of a skeleton of cyclized rubber, to which skeleton organotin phenolates of the formula $R_3Sn—O—Z$ are bonded via a carbon-carbon bond between the phenolate group and the cyclized rubber, R in the formula representing a hydrocarbon group containing 1—15 carbon atoms that is bonded directly to the metal atom and Z representing a phenolate group derived from a phenolic compound containing 6—15 carbon atoms.

9. Paint according to claim 8, characterized in that the paint contains at least 60 wt.% seawater-sensitive components, including the organotin-modified polymer and seawater-sensitive pigments and fillers, and in particular contains between 70 and 85 wt.% of such components.

10. Paint according to claims 8—9, characterized in that R represents a $C_{3-6}$ alkyl or cycloalkyl group or a phenyl group, Z represents a group derived from phenol or from a $C_{7-15}$ alkylphenol, and the tin content of the binder is between 2.5 and 15 wt.%, calculated as metallic tin.

**Patentansprüche**

1. Polymer mit einem Gehalt an Organozinnverbindung, die sich zur Verwendung als Bindemittel in Anstrichstoffen eignet, dadurch gekennzeichnet, daß es aus einem Skelett aus cyclisiertem Kautschuk besteht, an welches Skelett Organozinnphenolate der Formel $R_3Sn—O—Z$ über eine Kohlenstoff-Kohlenstoffbindung zwischen der Phenolatgruppe und dem cyclisierten Kautschuk gebunden sind, wobei R in der Formel eine Kohlenwasserstoffgruppe enthaltend 1 bis 15 Kohlenstoffatome, die direkt an das Metallatom gebunden ist darstellt, und Z eine Phenolatgruppe, abgeleitet von einer phenolischen Verbindung enthaltend 6 bis 15 Kohlenstoffatome, bedeutet.

2. Polymer nach Anspruch 1, dadurch gekennzeichnet, daß der Zinngehalt berechnet als metallisches Zinn, bezogen auf das gesamte Polymer, zwischen 1,5 und 20 Masse-% liegt.

3. Polymer nach den Ansprüchen 1—2, dadurch gekennzeichnet, daß der Zinngehalt zwischen 2,5 und 15 Masse-% liegt.

4. Polymer nach den Ansprüchen 1—3, dadurch gekennzeichnet, daß der Zinngehalt zwischen 5 und 10 Masse-% liegt.

5. Polymer nach den Ansprüchen 1—4, dadurch gekennzeichnet, daß R eine $C_{3-6}$-Alkyl- oder Cycloalkylgruppe oder eine Phenylgruppe ist.

6. Polymer nach den Ansprüchen 1—5, dadurch gekennzeichnet, daß Z von Phenol oder einem $C_{7-15}$-Alkylphenol abgeleitet ist.

7. Verfahren zur Herstellung eines Polymers nach einem oder mehreren der Ansprüche 1—6, dadurch gekennzeichnet, dass ein cyclisierter Kautschuk, enthaltend phenolische Gruppen die über eine Kohlenstoff-Kohlenstoffbindung gebunden sind bei erhöhter Temperatur und in einem inerten Lösungsmittel mit einem verätherbaren Trihydrocarbylzinnoxid oder -hydroxid, wobei das freigesetzte Reaktionswasser entfernt wird, oder mit einem Trihydrocarbylzinnchlorid umgesetzt wird.

8. Anstrichfarbe, enthaltend eine keimtötende Organozinnverbindung, dadurch gekennzeichnet, daß die Anstrichfarbe als Bindemittel ein Polymer bestehend aus einem Skelett aus cyclisiertem Kautschuk enthält, an welches Skelett Organozinnphenolate der Formel $R_3Sn—O—Z$ über eine Kohlenstoff-Kohlenstoffbindung zwischen der Phenolatgruppe und dem cyclisierten Kautschuk gebunden sind, wobei R in der Formel eine Kohlenwasserstoffgruppe enthaltend 1 bis 15 Kohlenstoffatome, die direkt an das Metallatom gebunden ist darstellt, und Z eine Phenolatgruppe, abgeleitet von einer phenolischen Verbindung enthaltend 6 bis 15 Kohlenstoffatome, bedeutet.

**0 090 448**

9. Anstrichfarbe nach Anspruch 8, dadurch gekennzeichnet, daß die Anstrichfarbe wenigstens 60 Masse-% an meerwasserempfindlichen Komponente, einschließlich das durch Organozinn modifizierte Polymer und gegen Meerwasser sensitive Pigmente und Füllstoffe, enthält und insbesondere zwischen 70 und 85 Masse-% solcher Komponenten enthält.

10. Anstrichfarbe nach den Ansprüchen 8—9, dadurch gekennzeichnet, daß R eine $C_{3-6}$-Alkyl- oder Cycloalkylgruppe oder eine Phenylgruppe darstellt, Z eine Gruppe abgeleitet von Phenol oder von einem $C_{7-15}$-Alkylphenol bedeutet, und der Zinngehalt des Bindemittels, berechnet als metallisches Zinn, zwischen 2,5 und 15 Masse-% liegt.

**Revendications**

1. Polymère contenant un composé d'organoétain convenant pour l'application comme liant dans une peinture, caractérisé en ce qu'il consiste en un squelette de caoutchouc cyclisé, squelette auquel des phénolates d'organo-étain de formule $R_3Sn—O—Z$ sont liés par une liaison carbone-carbone entre le groupe phénolate et le caoutchouc cyclisé, R représentant dans la formule un groupe hydrocarbure contenant 1 à 15 atomes de carbone, qui est relié directement à l'atome de métal et Z représentant un groupe phénolate dérivé d'un composé phénolique contenant 6—15 atomes de carbone.

2. Polymère selon la revendication 1, caractérisé en ce que la teneur en étain, calculée comme étain métallique par rapport au polymère entier, est comprise entre 1,5 et 20% en poids.

3. Polymère selon l'une des revendications 1 et 2, caractérisé en ce que la teneur en étain est comprise entre 2,5 et 15% en poids.

4. Polymère selon l'une des revendications 1 à 3, caractérisé en ce que la teneur en étain est comprise entre 5 et 10% en poids.

5. Polymère selon l'une des revendications 1 à 4, caractérisé en ce que R est un groupe alkyle ou cycloalkyle en $C_{3-6}$ ou un groupe phényle.

6. Polymère selon l'une des revendications 1 à 5, caractérisé en ce que Z est dérivé du phénol ou d'un alkylphénol en $C_{7-15}$.

7. Procédé de préparation d'un polymère selon l'une ou plusieurs des revendications 1 à 6, caractérisé en ce qu'on fait réagir un caoutchouc cyclisé contenant des groupes phénoliques liés par une liaison carbone-carbone, à température élevée et dans un solvant inerte, avec un oxyde ou un hydroxyde de tri-hydrocarbylétain qui est capable d'éthérification, l'eau de réaction libérée étant éliminée, ou avec un chlorure de tri-hydrocarbyl-étain.

8. Peinture contenant un composé germicide d'organo-étain, caractérisée en ce que la peinture contient, comme liant, un polymère consistant en un squelette de caoutchouc cyclisé, squelette auquel sont reliés des phénolates d'organo-étain, de formule $R_3Sn—O—Z$ par une liaison carbone-carbone, entre le groupe phénolate et le caoutchouc cyclisé, R représentant dans la formule un groupe hydrocarbure de 1—15 atomes de carbone qui est relié directement à l'atome de métal, et Z représentant un groupe phénolate dérivé d'un composé phénolique de 6—15 atomes de carbone.

9. Peinture selon la revendication 8, caractérisée en ce qu'elle contient au moins 60% en poids de composants sensibles à l'eau de mer, comprenant le polymère modifié par l'organo-étain et des pigments et des charges sensibles à l'eau de mer, et en ce qu'elle contient en particulier entre 70 et 85% en poids de tels composants.

10. Peinture selon l'une des revendications 8 et 9, caractérisée en ce que R représente un groupe alkyle ou cycloalkyle en $C_{3-6}$ ou un groupe phényle, Z représente un groupe dérivé du phénol ou d'un alkylphénol en $C_{7-15}$ et en ce que la teneur en étain du liant est comprise entre 2,5 et 15% en poids, calculée comme étain métallique.

6